# EUROPEAN PATENT APPLICATION

(11) **EP 4 769 068 A1**
(43) Date of publication of application: **01.07.2026**
(21) Application number: 25221395.4
(22) Date of filing: 08.12.2025
(51) Int. Cl.: G06F 1/26, G05F 1/46, H02M 3/156

(54) **POWER SUPPLY ADJUSTMENT DEVICE WITH MULTI-SEGMENT LOAD LINE, MOTHERBOARD, AND POWER SUPPLY ADJUSTMENT METHOD**

(30) Priority: 27.12.2024 TW 113151181
(71) Applicant: Giga-Byte Technology Co., Ltd., New Taipei City (TW)
(72) Inventor: CHEN,, Hung-Cheng, New Taipei City, R.O.C. (TW); LIAO,, Tse-Hsien, New Taipei City, R.O.C. (TW)
(74) Representative: dompatent

(57) **Abstract**

A power supply adjustment method, applicable for a processor (A1,42) and a power supply controller (A2,41), includes: obtaining (S1) working current of the processor (A1,42), obtaining (S3) a target power parameter from a pre-stored multi-segment load line according to the working current, and controlling (S5) the power supply controller (A2,41) to supply power to the processor (Al,42) according to the target power parameter. The pre-stored multi-segment load line indicate the relationship between a plurality of preset currents and a plurality of preset power parameters, and includes a plurality of segments corresponding to different current ranges and having different slopes. A power supply adjustment device (1) with multi-segment load line, applicable to a processor (Al) and a power supply controller (A2), includes a reading wire (11) and a control circuit (12,22,32). A motherboard (4) with multi-segment load line includes a power supply controller (41) and a processor (42).

## Description

### BACKGROUND

### 1. Technical Field

This disclosure relates to a power supply adjustment device, motherboard and power supply adjustment method.

### 2. Related Art

A central processing unit (CPU) mounted on a computer motherboard is typically designed with a fixed load line to balance performance and power consumption. In a default state, the larger the load of the CPU, the higher the voltage drop caused by the load line. However, when the CPU is overclocked or overvolted, the fixed load line produces a larger voltage drop, resulting in a decrease in system stability.

To solve this problem, users often lower the load line value to reduce the voltage drop and improve system stability. However, after the load line value is reduced, the voltage drops decreases in both light load and heavy load conditions, such that the original power-saving function may not be realized. Therefore, a load line with a fixed slope has limitations when applied under dynamic load conditions.

### SUMMARY

Accordingly, this disclosure provides a power supply adjustment method, motherboard and power supply adjustment device with multi-segment load line.

According to an embodiment of this disclosure, a power supply adjustment device with multi-segment load line is applicable to a processor and a power supply controller, and comprises a reading wire and a control circuit, wherein the control circuit is connected to the reading wire. The reading wire is configured to obtain a working current of the processor. The control circuit is configured to obtain a target power parameter from a pre-stored multi-segment load line according to the working current, and control the power supply controller to supply power to the processor according to the target power parameter, wherein the pre-stored multi-segment load line indicates a relationship between a plurality of preset currents and a plurality of preset power parameters, and includes a plurality of segments corresponding to different current ranges and having different slopes.

According to an embodiment of this disclosure, a motherboard with multi-segment load line comprises a power supply controller and a processor, wherein the processor is connected to the power supply controller. The processor is configured to obtain a target power parameter from a pre-stored multi-segment load line according to a working current of the processor, and control the power supply controller to supply power to the processor according to the target power parameter, wherein the pre-stored multi-segment load line indicates a relationship between a plurality of preset currents and a plurality of preset power parameters, and includes a plurality of segments corresponding to different current ranges and having different slopes.

According to an embodiment of this disclosure, a power supply adjustment method, applicable for a processor and a power supply controller, comprises: obtaining a working current of the processor; obtaining a target power parameter from a pre-stored multi-segment load line according to the working current; and controlling the power supply controller to supply power to the processor according to the target power parameter; wherein the pre-stored multi-segment load line indicates a relationship between a plurality of preset currents and a plurality of preset power parameters, and includes a plurality of segments corresponding to different current ranges and having different slopes.

In view of the above description, the power supply adjustment method, motherboard, and power supply adjustment device having the multi-segment load line of this disclosure may dynamically adjust power supply according to the working current of the processor by applying a load line having a non-fixed slope. Accordingly, even when the computer system is in an overclocking or overvoltage state, energy saving may be achieved under light load, and stability may also be maintained under heavy load.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is a functional block diagram of a power supply adjustment device and its applicable environment according to an embodiment of the present disclosure.
FIG. 2 is a functional block diagram of a power supply controller and a control circuit of the power supply adjustment device according to an embodiment of the present disclosure.
FIG. 3 is a functional block diagram of a power supply controller and a control circuit of the power supply adjustment device according to another embodiment of the present disclosure.
FIG. 4 is a functional block diagram of a motherboard according to an embodiment of the present disclosure.
FIG. 5 is a flowchart of a power supply adjustment method according to an embodiment of the present disclosure.
FIG. 6 is a schematic diagram of a multi-segment load line according to an embodiment of the present disclosure.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention. The following embodiments further illustrate various aspects of the present invention, but are not meant to limit the scope of the present invention.

The power supply adjustment device and method described below may be applied to the management of a processor and a power supply controller on a computer motherboard.

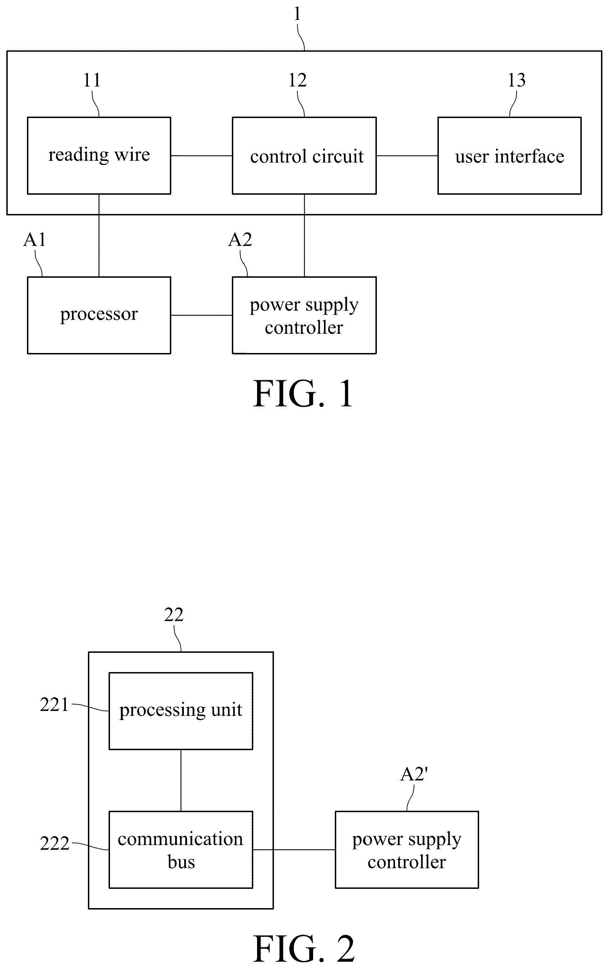

Please refer to FIG. 1, which is a functional block diagram of a power supply adjustment device and its applicable environment according to an embodiment of the present disclosure. As shown in FIG. 1, the power supply adjustment device 1 includes a reading wire 11, a control circuit 12 and a user interface 13, wherein the user interface 13 is an optional component. The control circuit 12 is connected to the reading wire 11 and the user interface 13 in a wired or wireless manner, and the control circuit 12 is connected to a power supply controller A2. The reading wire 11 is connected to a processor A1. The processor A1 may be, for example, a central processing unit, a graphics processing unit, a microcontroller, a programmable logic controller, or other processor having signal processing capability. The power supply controller A2 may be, for example, a pulse width modulation (PWM) controller or other type of power supply controller, for providing power to the processor A1. In an implementation, the processor A1 and the power supply controller A2 are components of a motherboard, and the power supply adjustment device 1 is disposed externally to the motherboard. In another implementation, the processor A1, the power supply controller A2 and the power supply adjustment device 1 are components of the same motherboard.

The reading wire 11 is configured to obtain the working current of the processor A1, particularly the current working current. For example, the reading wire 11 may be connected to an ammeter of the processor A1 or other current sensing circuit. It should be particularly noted that FIG. 1 exemplarily illustrates the reading wire 11 is connected to the processor A1 to obtain the working current of the processor A1. However, in other embodiments, the reading wire 11 may be a connecting wire connected to the power supply controller A2 implemented with a pulse width modulation controller, so as to obtain the working current of the processor A1 from the pulse width modulation controller. Alternatively, the reading wire 11 may be a connecting wire connected to a basic input/output system (BIOS) chip, so as to obtain the working current of the processor A1 from the BIOS chip.

The control circuit 12 is configured to obtain a target power parameter from a pre-stored multi-segment load line according to the working current, and control the power supply controller A2 to supply power to the processor A1 according to the target power parameter, wherein the pre-stored multi-segment load line indicates a relationship between a plurality of preset currents and a plurality of preset power parameters, and includes a plurality of segments corresponding to different current ranges and having different slopes. The control circuit 12 may at least include a port and a processing unit, wherein the port is configured to connect to the power supply controller A2, and the processing unit may be, for example, a BIOS chip, an embedded controller (EC), or a microcontroller unit (MCU) or other component having signal processing capability, and is configured to adjust a load line value of the power supply controller A2 or a load unit connected through the power supply controller A2 via the port. The multi-segment load line may be a plurality of load lines, and may be selected according to a model or type of the processor A1. The plurality of segments may refer to two or more than two segments, depending on the current load condition of the processor A1. The preset current may be a current range that the processor A1 is preset to withstand, for example, between 0 and 200 amperes, or may refer to the current converted from the power consumption used by the processor A1. The target power parameter may be voltage, power, power supply efficiency, over current protection (OCP) threshold, or over voltage protection (OVP) threshold.

In an embodiment, the plurality of segments of the pre-stored multi-segment load line at least includes a first segment corresponding to a first current range and a second segment corresponding to a second current range, the current value of the first current range is smaller than the current value of the second current range, and the slope of the first segment is greater than the slope of the second segment. The first current range may be applicable when the processor is under a light load, and the first segment may enable a larger voltage drop to achieve power saving during the light load. The second current range may be applicable when the processor is under a heavy load, and the second segment may enable a smaller voltage drop to maintain system stability and prevent system crash, computational error, or performance degradation caused by excessive voltage drop. Specifically, the slope of the first segment is greater than twice the slope of the second segment. For example, the first current range may be greater than 0 amperes and not greater than 50 amperes, the slope of the first segment may be 0.5, the second current range may be greater than 50 amperes and not greater than 100 amperes, and the slope of the second segment may be 0.2. In an embodiment, the slope may refer to a resistance value.

The user interface 13 may be, for example, an input device such as a keyboard, a mouse, or a touch screen, and is configured to receive a modification command and send the modification command to the control circuit 12, wherein the control circuit 12 is further configured to adjust the pre-stored multi-segment load line according to the modification command. The user interface 13 may provide the user with access to modify the multi-segment load line, and send the modification command to the control circuit 12. For example, the user may modify the slope of one or more segments of the multi-segment load line according to the model or usage condition of the processor A1, or modify a switching point (i.e., a boundary between current ranges) corresponding to a current value. In an embodiment, the modification command may indicate a specified switching current value as a switching point between two of the plurality of segments, and the control circuit 12 is configured to adjust the specified switching current value to a preset ratio as the switching point. That is, the control circuit 12 may fine-tune the user-specified switching current value, and then use the fine-tuned switching current value as the switching point. For example, when the user specifies that the switching point between the first segment and the second segment of the multi-segment load line corresponds to 50 amperes, the control circuit 12 may set the current value corresponding to the switching point to 45 amperes according to a preset ratio, for example 10%, that is, when the load of the processor A1 exceeds 45 amperes, the switching is made from the first segment to the second segment. The preset ratio may provide a load stage buffer region, thereby effectively preventing system abnormality caused by a sudden heavy load. The preset ratio may be set as required. In the above example, the final setting of the current value is the specified current value minus the specified current value multiplied by the preset ratio. In other embodiments, the final setting of the current value may be the specified current value plus the specified current value multiplied by the preset ratio.

Please refer to FIG. 2, which is a functional block diagram of a control circuit of a power supply controller and a power supply adjustment device according to an embodiment of the present disclosure. The control circuit 12 in FIG. 1 may be implemented by the control circuit 22 of FIG. 2. As shown in FIG. 2, the control circuit 22 may include a processing unit 221 and a communication bus 222, and the communication bus 222 is connected to the processing unit 221 and a power supply controller A2'. In this embodiment, the power supply controller A2' is a digital controller.

The processing unit 221 is configured to obtain the target power parameter from the pre-stored multi-segment load line according to the working current, and adjust a load line value in the power supply controller A2' through the communication bus 222 according to the target power parameter. For example, the processing unit 221 may be a BIOS chip, an embedded controller, or a microcontroller unit or other components having signal processing capability, and may adjust a load line value in the power supply controller A2' through the communication bus 222, such as voltage, current, and/or power limit. The communication bus 222 may be a power management bus (PMBus) or an inter-integrated circuit bus (I²C Bus).

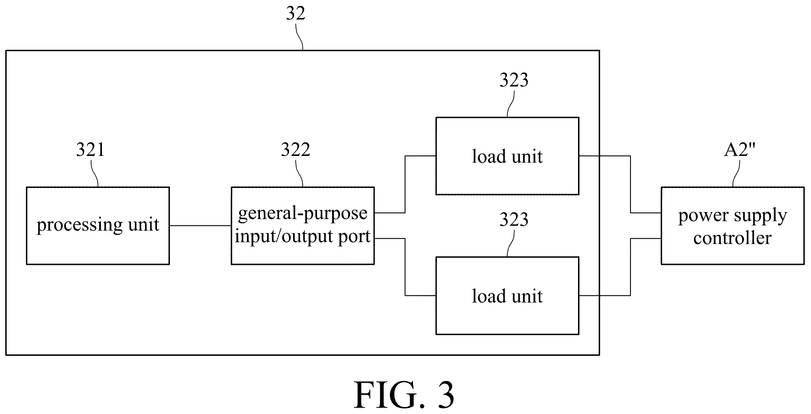

Please refer to FIG. 3, which is a functional block diagram of a control circuit of a power supply controller and a power supply adjustment device according to another embodiment of the present disclosure. The control circuit 12 in FIG. 1 may be implemented by the control circuit 32 of FIG. 3. As shown in FIG. 3, the control circuit 32 may include a processing unit 321, a general-purpose input/output (GPIO) port 322 and a plurality of load units 323. The general-purpose input/output port 322 may be connected to the processing unit 321 and the plurality of load units 323, and connected to a power supply controller A2" through the plurality of load units 323. In this embodiment, the power supply controller A2" is an analog controller.

The processing unit 321 may be connected to the power supply controller A2" through the general-purpose input/output port 322 and the plurality of load units 323. The processing unit 321 is configured to obtain the target power parameter from the pre-stored multi-segment load line according to the working current, and according to the target power parameter, switch on at least a part of the plurality of load units 323 to the power supply controller A2" through the general-purpose input/output port 322, so as to adjust the power provided by the power supply controller A2". For example, the processing unit 321 may be a BIOS chip, an embedded controller, a microcontroller unit, or other components having signal processing capability.

The plurality of load units 323 each comprises at least one of a resistor and a capacitor, and the plurality of load units 323 is configured to connect to the power supply controller A2". The plurality of load units 323 may include different numbers of resistors and capacitors to have different impedance values. The processing unit 321 may control the load unit 323 turned on by the power supply controller A2" through the general-purpose input/output port 322, thereby adjusting the power provided by the power supply controller A2". In particular, the impedance value is proportional to the load line value (slope).

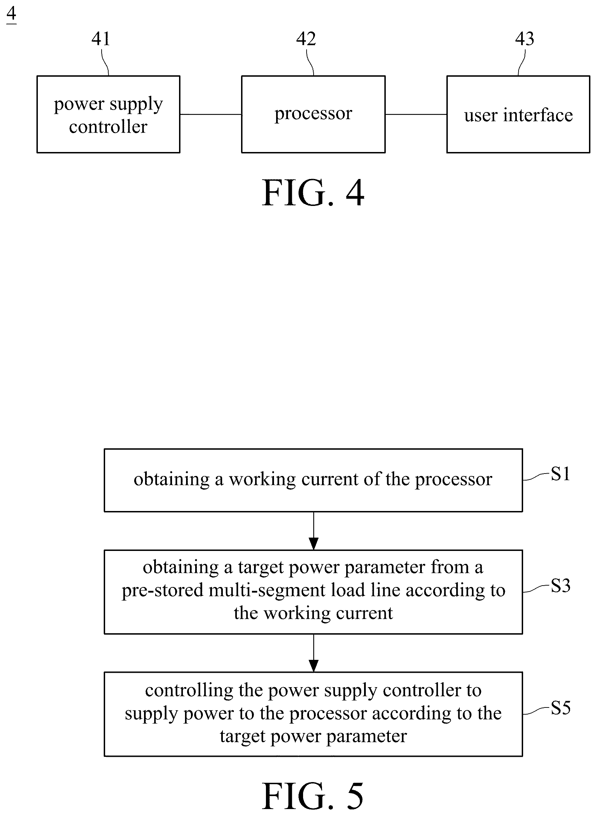

Please refer to FIG. 4, which is a functional block diagram of a motherboard according to an embodiment of the present disclosure. As shown in FIG. 4, the motherboard 4 comprises a power supply controller 41, a processor 42 and a user interface 43, wherein the processor 42 is connected to the power supply controller 41 and the user interface 43 via a wired or wireless connection. The user interface 43 is an optional component. The implementation and operation of the power supply controller 41 and the user interface 43 may be the same as the power supply controller A2 and the user interface 13 shown in FIG. 1, and would not be redundantly described herein.

The processor 42 is configured to obtain a target power parameter from a pre-stored multi-segment load line according to working current of the processor, and control the power supply controller 41 to supply power to the processor 42 according to the target power parameter, wherein the pre-stored multi-segment load line indicates a relationship between a plurality of preset currents and a plurality of preset power parameters, and includes a plurality of segments corresponding to different current ranges and having different slopes. The implementation of the pre-stored multi-segment load line may be the same as that in the foregoing embodiments, and would not be redundantly described herein. In this embodiment, the processor 42 may perform the operations performed by the control circuit 12 in the foregoing embodiments. For example, the processor 42 may be a central processing unit, a graphics processing unit, a microcontroller, a programmable logic controller, or other processor having signal processing capability. The target power parameter may be, for example, voltage or power. For instance, the processor 42 may correspond its own working current to a target voltage, and transmit a control signal to the power supply controller 41, such that the power supply controller 41 adjusts the output voltage or current to stably provide power meeting the operating requirements.

Please refer to FIG. 5, which is a flowchart of a power supply adjustment method according to an embodiment of the present disclosure. As shown in FIG. 5, the power supply adjustment method comprises step S1: obtaining a working current of the processor; step S3: obtaining a target power parameter from a pre-stored multi-segment load line according to the working current; and step S5: controlling the power supply controller to supply power to the processor according to the target power parameter. The power supply adjustment method may be applied to the power supply adjustment device 1 shown in FIG. 1 and the motherboard 4 shown in FIG. 4. The power supply adjustment method shown in FIG. 5 would be exemplarily described below with reference to the power supply adjustment device 1 shown in FIG. 1. In another embodiment, the power supply adjustment method may be performed by the processor 42 of the motherboard 4 shown in FIG. 4.

In step S1, the reading wire 11 obtains the working current of the processor A1. Specifically, the reading wire 11 may obtain the working current of the processor A1 by using a voltage drop across a fixed resistor and calculating the current according to Ohm's law, thereby providing real-time current data to the control circuit 12. Alternatively, the reading wire 11 may obtain the working current of the processor A1 from the pulse width modulation controller, or obtain the working current of the processor A1 from the basic input/output system.

In step S3, the control circuit 12 obtains a target power parameter from a pre-stored multi-segment load line according to the working current. Specifically, the pre-stored multi-segment load line may indicate a relationship between a plurality of preset currents and a plurality of preset power parameters, and includes a plurality of segments corresponding to different current ranges and having different slopes.

In step S5, the control circuit 12 controls the power supply controller to supply power to the processor according to the target power parameter. Specifically, the control circuit 12 may obtain the parameter for dynamic voltage adjustment according to a design guideline or a power requirement specification of the processor A1, and control the power supply controller A2 to perform power compensation according to a voltage drop calculated from the load line, thereby adjusting the power provided by the power supply controller A2 to the processor A1.

In an embodiment, the power supply adjustment method may further comprise receiving a modification command and adjusting the pre-stored multi-segment load line according to the modification command. For example, a user may modify the multi-segment load line via the user interface 13 and transmit the modification command to the control circuit 12. The modification command may indicate a specified switching current value as a switching point between two of the plurality of segments, and the aforementioned adjusting the pre-stored multi-segment load line according to the modification command may include adjusting the specified switching current value by a preset ratio to serve as the switching point.

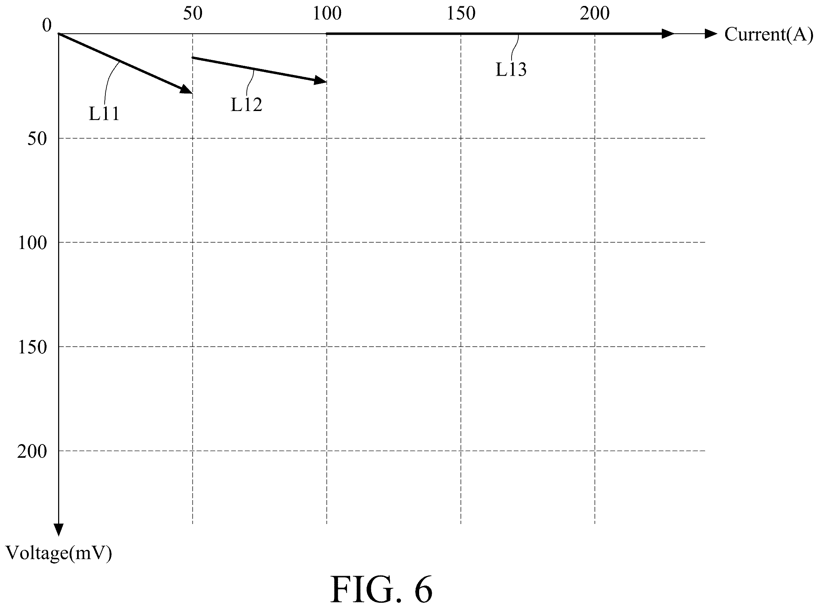

Please refer to FIG. 6, wherein FIG. 6 is a schematic diagram of multi-segment load line according to an embodiment of the present disclosure. As shown in FIG. 6, the multi-segment load line may have at least three segments, including a first segment L11, a second segment L12 and a third segment L13. The multi-segment load line may correspond to an overclocking state of the processor. During a booting process, a basic input/output system may identify that the processor is in the overclocking state and notify the power supply adjustment device or the processor to perform power supply control using the multi-segment load line.

In this embodiment, the first segment L11 represents that when the working current of the processor is within 50 amperes (inclusive 50 amperes), using a 0.5 milliohm load segment may allow a system including the processor (for example, a computer system) to operate stably; the second segment L12 represents that when the working current of the processor is between 51 amperes and 100 amperes, using 0.2 milliohm allows the system to operate stably; the third segment L13 represents that when the working current of the processor is greater than or equal to 100 amperes, using 0 milliohm allows the system to operate stably. The power supply adjustment device or the processor may detect current data of the pulse width modulation, and adjust the segment of the load line in use according to the current data, thereby achieving an effect of dynamically changing the slope in use according to the load current data.

In view of the above description, the power supply adjustment method, motherboard, and power supply adjustment device having the multi-segment load line disclosed in this application may dynamically adjust power supply according to the working current of the processor by applying a load line having a non-fixed slope. Accordingly, even when the computer system is in an overclocking or overvoltage state, energy saving may be achieved under light load, and stability may also be maintained under heavy load.

## Claims

1. A power supply adjustment device (1) with a multi-segment load line, applicable to a processor (A1) and a power supply controller (A2), and comprising:
a reading wire (11) configured to obtain a working current of the processor (A1); and
a control circuit (12,22,32) connected to the reading wire (11), and configured to obtain a target power parameter from a pre-stored multi-segment load line according to the working current, and control the power supply controller (A2) to supply power to the processor (A1) according to the target power parameter;
wherein the pre-stored multi-segment load line indicates a relationship between a plurality of preset currents and a plurality of preset power parameters, and includes a plurality of segments corresponding to different current ranges and having different slopes.

2. The power supply adjustment device (1) according to claim 1, wherein the plurality of segments at least includes a first segment corresponding to a first current range and a second segment corresponding to a second current range, a current value of the first current range is smaller than a current value of the second current range, and a slope of the first segment is greater than a slope of the second segment.

3. The power supply adjustment device (1) according to claim 2, wherein the slope of the first segment is greater than twice the slope of the second segment.

4. The power supply adjustment device (1) according to claim 1, wherein the power supply controller (A2') is a digital controller, and the control circuit (12,22) comprises:
a communication bus (221) configured to connect to the power supply controller (A2'); and
a processing unit (222) connected to the communication bus (221), and configured to obtain the target power parameter from the pre-stored multi-segment load line according to the working current, and adjust a load line value in the power supply controller (A2') through the communication bus (221) according to the target power parameter

5. The power supply adjustment device (1) according to claim 1, wherein the power supply controller (A2") is an analog controller, and the control circuit (32) comprises:
a plurality of load units (323) each comprising at least one of a resistor and a capacitor, and the plurality of load units (323) configured to connect to the power supply controller (A2");
a general-purpose input/output port (322) connected to the plurality of load units (323); and
a processing unit (321) connected to the general-purpose input/output port (322), and configured to obtain the target power parameter from the pre-stored multi-segment load line according to the working current, and switch on at least a part of the plurality of load units (323) to the power supply controller (A2") through the general-purpose input/output port (322) according to the target power parameter so as to adjust the power supplied by the power supply controller (A2").

6. The power supply adjustment device (1) according to claim 1, further comprising:
a user interface (13) connected to the control circuit (12,22,32), and configured to receive a modification command and send the modification command to the control circuit (12,22,32);
wherein the control circuit (12,22,32) is further configured to adjust the pre-stored multi-segment load line according to the modification command.

7. The power supply adjustment device (1) according to claim 6, wherein the modification command designates a specified switching current value as a switching point between two of the plurality of segments, and the control circuit (12,22,32) is configured to adjust the specified switching current value with a preset ratio to serve as the switching point.

8. A motherboard (4) with multi-segment load line, comprising:
a power supply controller (41); and
a processor (42) connected to the power supply controller (41), and configured to obtain a target power parameter from a pre-stored multi-segment load line according to a working current of the processor (42), and control the power supply controller (41) to supply power to the processor according to the target power parameter;
wherein the pre-stored multi-segment load line indicates a relationship between a plurality of preset currents and a plurality of preset power parameters, and includes a plurality of segments corresponding to different current ranges and having different slopes.

9. The motherboard (4) according to claim 8, wherein the plurality of segments at least includes a first segment corresponding to a first current range and a second segment corresponding to a second current range, a current value of the first current range is smaller than a current value of the second current range, and a slope of the first segment is greater than a slope of the second segment.

10. The motherboard (4) according to claim 9, wherein the slope of the first segment is greater than twice the slope of the second segment.

11. The motherboard (4) according to claim 8, further comprising:
a user interface (43) connected to the processor (42), and configured to receive a modification command and send the modification command to the processor (42);
wherein the processor (42) is further configured to adjust the pre-stored multi-segment load line according to the modification command.

12. The motherboard (4) according to claim 11, wherein the modification command designates a specified switching current value as a switching point between two of the plurality of segments, and the processor (42) is configured to adjust the specified switching current value with a preset ratio to serve as the switching point.

13. A power supply adjustment method, applicable for a processor (A1,42) and a power supply controller (A2,41), comprising:
obtaining (S1) a working current of the processor (A1,42);
obtaining (S3) a target power parameter from a pre-stored multi-segment load line according to the working current; and
controlling (S5) the power supply controller (A2,41) to supply power to the processor (A1,42) according to the target power parameter;
wherein the pre-stored multi-segment load line indicates a relationship between a plurality of preset currents and a plurality of preset power parameters, and includes a plurality of segments corresponding to different current ranges and having different slopes.

14. The power supply adjustment method according to claim 13, wherein the plurality of segments at least includes a first segment corresponding to a first current range and a second segment corresponding to a second current range, a current value of the first current range is smaller than a current value of the second current range, and a slope of the first segment is greater than a slope of the second segment.

15. The power supply adjustment method according to claim 14, wherein the slope of the first segment is greater than twice the slope of the second segment.

16. The power supply adjustment method according to claim 13, further comprises:
receiving a modification command; and
adjusting the pre-stored multi-segment load line according to the modification command.

17. The power supply adjustment method according to claim 16, wherein the modification command designates a specified switching current value as a switching point between two of the plurality of segments, and adjusting the pre-stored multi-segment load line according to the modification command includes adjusting the specified switching current value with a preset ratio to serve as the switching point.
